# EUROPÄISCHE PATENTSCHRIFT

(11) **EP 2 028 059 B1**
(45) Veröffentlichungstag und Bekanntmachung des Hinweises auf die Patenterteilung: **22.12.2010**
(21) Anmeldenummer: 08012740.0
(22) Anmeldetag: 15.07.2008
(51) Int. Cl.: B60R 16/023

(54) **Kraftfahrzeug mit einer Anzeige des durch zugeschaltete Betriebssysteme oder montierte Anbauteile verursachten Mehrverbrauchs**
Motor vehicle with a display of additional consumption caused by switching on operational systems or mounted components
Véhicule automobile doté d'un affichage de la consommation multiple par des systèmes de fonctionnement mis sous tension ou des pièces rapportées montées

(30) Priorität: 24.08.2007 DE 202007011919 U
(43) Veröffentlichungstag der Anmeldung: 25.02.2009
(73) Patentinhaber: Audi AG, 85045 Ingolstadt (DE)
(72) Erfinder: Burgert, Sascha, 85088 Vohburg (DE); Apel, Frank, 85055 Ingolstadt (DE); Ecard, Karl Bernhard, 89077 Ulm (DE)
(74) Vertreter: Thielmann, Frank

(56) Entgegenhaltungen:
- EP-A- 0 601 300
- DE-A1- 10 138 750
- US-A1- 2003 144 779

## Beschreibung

Die Erfindung betrifft ein Kraftfahrzeug, umfassend mehrere vom Fahrer wahlweise zu- und abschaltbare Systeme oder ein oder mehrere bei Bedarf montierbare Anbauelemente, deren Betrieb oder Anbau zu einer Erhöhung des Energieverbrauchs führt.

In modernen Kraftfahrzeugen sind diverse Systeme verbaut, die vom Fahrer wahlweise zu- und abgeschaltet werden können, je nachdem, ob der Fahrer das jeweilige System betreiben möchte oder nicht. Diese häufig auch als "Betriebssysteme" oder "Komfortsysteme" benannten Systeme sind beispielsweise eine Klimaanlage, eine Heckscheibenheizung, eine Radio-/CD-/Hifi-Anlage, Sitzheizungen, ein gekühltes Handschuhfach, Innenraumgebläse, Beleuchtungseinrichtungen etc. Da all diese Systeme Stromverbraucher sind, sind sie zwangsläufig bei Zuschaltung entweder über die Batterie oder bei laufendem Fahrzeug über den Generator zu betreiben. Der Generator seinerseits jedoch wird über die Brennkraftmaschine angetrieben. Je mehr Strom der Generator zur Verfügung stellen muss, umso höher ist der bezogen auf den Generatorbetrieb anfallende anteilige Kraftstoffverbrauch des Brennkraftmotors. Dieser grundsätzliche Zusammenhang ist dem Fachmann bekannt, üblicherweise jedoch nicht dem Fahrer selbst. Dieser schaltet die Betriebssysteme beliebig dann zu, wenn er sie benötigt, wobei häufig auch Betriebssysteme zugeschaltet sind, die im Hinblick auf die gegebene Ist-Situation nicht benötigt werden und vom Fahrer entweder versehentlich zugeschaltet wurden oder schlichtweg vergessen wurden, abzuschalten. Hieraus resultiert zwangsläufig ein erhöhter Kraftstoffverbrauch, ohne dass der Fahrer hiervon weiß bzw. dies wissentlich in Kauf nimmt. Eine zusätzliche Generatorlast stellen aber nicht nur elektrische betriebene Systeme oder Verbraucher dar, sondern auch mechanisch betriebene Systeme wie z.B. eine Klimanalage mit über einen Riementrieb angetriebenem Kompressor, oder eine Standheizung. Auch hieraus resultiert ein Mehrverbrauch. Ferner sind auch montierte Anbauteile wie z.B. eine Dachbox, ein Dachträger oder ein Fahrradhalter verbrauchserhöhend, da durch sie der Luftwiderstand erhöht wird, wobei solche Anbauteile oft nicht demontiert werden, obwohl sie nicht benötigt werden. Sämtliche oben genannten Ursachen führen zu einer Lastpunkterhöhung des Motors und zu einer Verbrauchserhöhung. "Energieverbrauch" beschreibt im folgenden jede Art von Energie, die ein fahrzeugseitiges Antriebsaggregat zum Betrieb nutzt, also Kraftstoff in Form von Benzin oder Diesel, wie auch bei Einsatz eines Elektromotors der Betriebsstrom, bei Einsatz eines Erdgasantriebs der Erdgasverbrauch, etc.

DE 101 38 750 A1 betrifft ein Fahrzeug-Rechnersystem mit einer Rechnereinheit und einem Bildschirm zur Darstellung Von fahrzeugspezifischen Informationen und einer Energie-Erfassungseinrichtung, die den Energieverbrauch von Verbrauchern in einem Kraftfahrzeug erfasst und entsprechende Energieverbrauchs-Daten liefert, sowie eine Auswerteeinrichtung, die diese Energieverbrauchs-Daten empfängt, in einen äquivalenten Treibstoffverbrauch des Fahrzeugs umsetzt und dem Bildschirm zur Darstellung zuführt.

US 2003/0144779 A1 betrifft eine Kraftfahrzeug-Energieverteilungsvorrichtung in einem Kraftfahrzeug, wobei das Kraftfahrzeug zum Zwecke der Erkennung einer Kraftstoffeinsparung mit einem Kraftstoffökonomieanzeigegerät ausgerüstet ist, welches eine Kraftstoffverbrauchsrate auf einer Anzeigevorrichtung anzeigt, und so den Kraftfahrzeugführer über den gegenwärtigen Zustand der Kraftstoffökonomie informiert oder diesen von ihm bestätigen lässt.

EP 0 601 300 A1 betrifft ein Fahrzeug mit Sensoren zur Erfassung von verschiedenen Fahrzuständen, wobei eine Steuereinrichtung zur Beeinflussung der Brennkraftmaschine mit diesen Sensoren verbunden ist. Ferner sind elektrische Verbraucher vorgesehen, die aus einer Fahrzeugbatterie und/oder einem von dem Antriebsmotor antreibbaren Generator mit elektrischer Energie versorgbar sind. Die Steuereinrichtung ist derart ausgebildet, dass fahrzustandsabhängig jeweils vorgegebene elektrische Verbraucher entsprechend einer in der Steuereinrichtung abgelegten Rangfolge ab- oder rückgeschaltet werden.

Der Erfindung liegt damit das Problem zugrunde, ein Kraftfahrzeug anzugeben, das dem Fahrer die Möglichkeit zur Reduzierung des auf laufende Systeme oder montierte Anbauelemente zurückzuführenden Energiemehrverbrauchs ermöglicht.

Zur Lösung dieses Problems ist es bei einem Kraftfahrzeug der eingangs genannten Art erfindungsgemäß eine Einrichtung zur Ermittlung des system oder anbauelementspezifischen Verbrauchsanteils und zur Ausgabe einer Verbrauchsinformation an einer Anzeigeeinrichtung vorgesehen ist.

Die erfindungsgemäß vorgesehene Einrichtung ermöglicht es, zu jedem momentan zugeschalteten System (=Komfortsystem oder Betriebssystem) den systemspezifischen Verbrauchsanteil zu ermitteln, also die Kraftstoff, Strom-, oder Gasmenge, die dieses System als Mehrverbrauch zum reinen aus dem Betrieb des Antriebsaggregats, also z.B. der Brennkraftmaschine resultierenden Grundverbrauch beiträgt. Gestützt auf diesen oder diese ermittelten Verbrauchsanteile ist die Einrichtung weiterhin zur Ausgabe wenigstens einer Verbrauchsinformation an einer Anzeigeeinrichtung ausgebildet, das heißt, der Fahrer erhält eine tatsächliche Information über einen Mehrverbrauch, der auf ein oder mehrere zugeschaltete Systeme oder ein montiertes Anbauteil bzw. ein daraus resultierendes Zusatzgewicht zurückzuführen ist.

Für den Fahrer stellt diese Verbrauchsinformation eine "greifbare" weil sofort verständliche und intuitive Information dar, die ihn mit dem Umstand konfrontiert, dass aufgrund des Betriebs eines oder mehrerer solcher Betriebs- oder Komfortsysteme ein tatsächlicher und gegebenenfalls auch zahlenmäßig angebbarer Mehrverbrauch einhergeht. Er kann daraufhin zugeschaltete Betriebessysteme oder die Montage einer Dachbox, eines Fahrradhalters etc. entsprechend überprüfen und auf die Sinnhaftigkeit deren Betriebs oder Vorhandenseins hin prüfen und gegebenenfalls das ein oder andere Betriebssystem ausschalten oder später die Dachbox abbauen, wodurch er aktiv den Kraftstoffverbrauch, sei es Benzin, Diesel oder Gas, reduzieren oder eine Verlängerung der Reichweite bei Elektrofahrzeugen erreichen kann.

Die Einrichtung kann hierbei zur Ermittlung des Verbrauchsanteils anhand der insbesondere elektrischen Leistungsaufnahme eines elektrisch oder mechanisch angetriebenen Systems direkt oder indirekt beschreibenden Informationen ausgebildet sein. Diese Leistungsaufnahme kann entweder direkt erfasst werden, wenn ein System, beispielsweise die Heckscheibenheizung, stets dieselbe Leistungsaufnahme aufweist. In einem solchen Fall kann dieser Leistungsaufnahmewert beispielsweise in einem Speicher einer geeigneten Steuerungseinrichtung hinterlegt und direkt diesem System zugeordnet sein, er wird also nicht berechnet. Solche festen Leistungsaufnahmewerte sind jedoch nicht für jedes Betriebssystem ermittelbar, vielmehr hängt deren Leistungsaufnahme häufig von den konkreten Einstellungen der Betriebssysteme und der gesamten Fahrsituation ab. In einem solchen Fall erfolgt die Ermittlung des Verbrauchsanteils mittels diesen Anteil indirekt beschreibenden Informationen. Als solche Informationen werden zweckmäßigerweise ein oder mehrere aktuelle Betriebsparameter des Systems verwendet, anhand welcher Betriebsparameter die Bestimmung der Leistungsaufnahme mittels eines oder mehrere systemspezifischer Kennfelder oder Kennlinien erfolgt. Das heißt, dass die Einrichtung respektive deren Steuerungseinrichtung die systembezogenen Betriebsparameter beispielsweise über einen Fahrzeugbus, z. B. den CAN-Bus, abgreift und die momentane Leistungsaufnahme basierend auf diesen Betriebsparametern anhand geeigneter Kennfelder oder Kennlinien, die selbstverständlich systemspezifisch ausgelegt sind, ermittelt. Hierüber kann ein situationsbezogener weil in Abhängigkeit aktueller Betriebsparameter eines jeweiligen Systems ermittelter Ist-Leistungsaufnahmewert errechnet werden. Dies gilt sowohl für elektrisch getriebene Systeme als auch für mechanisch angetriebene Systeme wie z.B. eine Klimaanlage.

Nachdem je nach zu bewertendem Betriebssystem nicht nur unmittelbare Betriebssystemparameter in die Ermittlung der Leistungsaufnahme und daraus resultierend des Verbrauchsanteils eingehen, sondern auch andere die momentane Fahrsituation beschreibende Informationen, sieht eine zweckmäßige Weiterbildung der Erfindung vor, dass die Einrichtung zur Ermittlung der Verbrauchsinformation ferner in Abhängigkeit eines oder mehrerer Betriebsparameter anderer Fahrzeugsysteme ausgebildet ist. Als solche Betriebsparameter ist beispielsweise die aktuelle Ist-Geschwindigkeit, die Motordrehzahl, die Motorlast oder die Generatorleistung zu nennen. Diese hier nur exemplarisch aufgezählten vier Parameter haben Auswirkung auf den Verbrauchsanteil, der gegebenenfalls in Abhängigkeit einer Veränderung eines oder mehrerer der genannten Betriebsparameter seinerseits variiert, weshalb ihre Berücksichtigung im Rahmen der Informationsermittlung zweckmäßig ist. Insbesondere bei Berücksichtigung der Leistung, z.B. der Generatorleistung, als Betriebsparameter ist es zweckmäßig, wenn die Einrichtung zur Glättung der ermittelten und auszugebenden Verbrauchsinformation ausgebildet ist. Denn ansonsten würde, nachdem sich z.B. die Generatorleistung quasi kontinuierlich ändert, sich auch die auszugebenden Verbrauchsinformation kontinuierlich ändern. Um nun dem Fahrer eine zumindest über eine bestimmte Zeitdauer konstante "ruhige" Verbrauchsinformation auszugeben, ist die erfindungsgemäß Glättung vorgesehen, im Rahmen welcher als Leistungswert, z.B. für die Generatorleistung, beispielsweise ein Durchschnittsleistungswert angesetzt wird, der z.B. aus der Generatorleistung, die jeweils für 60 Sekunden rückschauend ermittelt wurde. Gegebenenfalls kann hierbei zusätzlich eine Art Toleranzwert hinsichtlich der Leistungsänderung berücksichtigt werden. Denkbar ist es aber, anstelle einer Erfassung der tatsächlichen Leistung, z.B. der Generatorleistung, auch kontinuierlich einen fest vorgegebenen, unveränderlichen Wert zu berücksichtigen.

Hinsichtlich der auszugebenden Verbrauchsinformation sind unterschiedliche Ausgestaltungen denkbar. So kann nach einer ersten Erfindungsalternative jede einzelne systemspezifische Verbrauchsinformation ausgegeben werden. Das heißt, der Fahrer erhält neben einer Anzeige des jeweils eingeschalteten System auch die systemspezifische Verbrauchsinformation, die zu diesem System ermittelt wurde. Hieran kann er ohne Weiteres erkennen, welches System besonders negativ hinsichtlich des Gesamtverbrauchs arbeitet, und welches zu einem geringerem Kraftstoffmehrverbrauch führt. Alternativ oder zusätzlich kann als Verbrauchsinformationswert auch der Gesamtverbrauch aller zugeschalteten Betriebs- oder Komfortsysteme ausgegeben werden, das heißt, dass aus den einzelnen systemspezifischen Verbrauchsinformationen ein Gesamtverbrauchswert aller zugeschalteten Betriebs- oder Komfortsysteme ermittelt und ausgegeben wird. Zweckmäßigerweise werden beide Informationen ausgegeben, um dem Fahrer möglichst viele Informationen zu geben.

Auch hinsichtlich der Art der ausgegebenen Verbrauchsinformationen sind unterschiedliche Ausgestaltungen denkbar. So kann eine Verbrauchsinformation in einer Angabe des durchschnittlichen Verbrauchs in Litern pro 100 km vorgesehen sein, wobei diese Ausgabeeinheit dann gewählt wird, wenn das Fahrzeug fährt. Zusätzlich oder alternativ kann die Verbrauchsinformation auch den Verbrauch in Litern pro Stunde angeben, wenn das Fahrzeug steht, wobei je nach Betriebszustand die Ausgabeeinheit auch wechseln kann. Alternativ oder zusätzlich ist es auch denkbar, die Verbrauchsinformation als prozentualen Anteil am Gesamtverbrauch aller zugeschalteten Betriebssysteme auszugeben. Der Fahrer erhält hierüber also eine Information, wie viel Prozent beispielsweise die Klimaanlage oder die Heckscheibenheizung am Kraftstoffverbrauch aller zugeschalteten Betriebssysteme ausmachen.

Nach einer zweckmäßigen Weiterbildung der Erfindung kann ferner vorgesehen sein, dass eine den Anteil des momentanen Gesamtverbrauchs seitens der zugeschalteten Betriebssysteme am maximal möglichen Gesamtverbrauch aller zugeschalteten Betriebssysteme anzeigende Verbrauchsinformation ausgebbar ist. Diese Verbrauchsinformation, beispielsweise in Form eines Leuchtbalkens zeigt an, wie hoch der momentane Komfortsystem-Kraftstoffverbrauch anteilig im Verhältnis zum maximal möglichen Gesamtkraftstoffverbrauch unter Annahme, dass alle Systeme auch eingeschaltet sind, ist. Auch diese Information ist für den Fahrer hilfreich.

Wie bereits beschrieben besteht die Möglichkeit, nur eine den Gesamtverbrauch anzeigende Verbrauchsinformation auszugeben, alternativ jedoch auch die einzelnen systemspezifischen Verbrauchsinformationen, wobei dann zweckmäßigerweise natürlich auch die jeweils zugeschalteten Betriebssysteme, zu denen die Verbrauchsinformationen ermittelt und ausgegeben werden, angezeigt werden. Der Fahrer erhält dann sofort eine genaue Information dahingehend, welches System zugeschaltet ist und kann dann unter Berücksichtigung der weiteren Verbrauchsinformationen - sei es dass lediglich eine den Gesamtverbrauch anzeigende Verbrauchsinformation ausgegeben wird, sei es dass zu jedem Betriebssystem die systemspezifische Verbrauchsinformation ausgegeben wird - entsprechend reagieren und ein oder mehrere eigentlich nicht benötigte Betriebssysteme ausschalten.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung eines erfindungsgemäß Kraftfahrzeugs mit herausgezogener Darstellung der erfindungsgemäß rele- vanten Komponenten,
- Fig. 2 - 4: verschiedene Anzeigemöglichkeiten der Verbrauchsinformatio- nen.

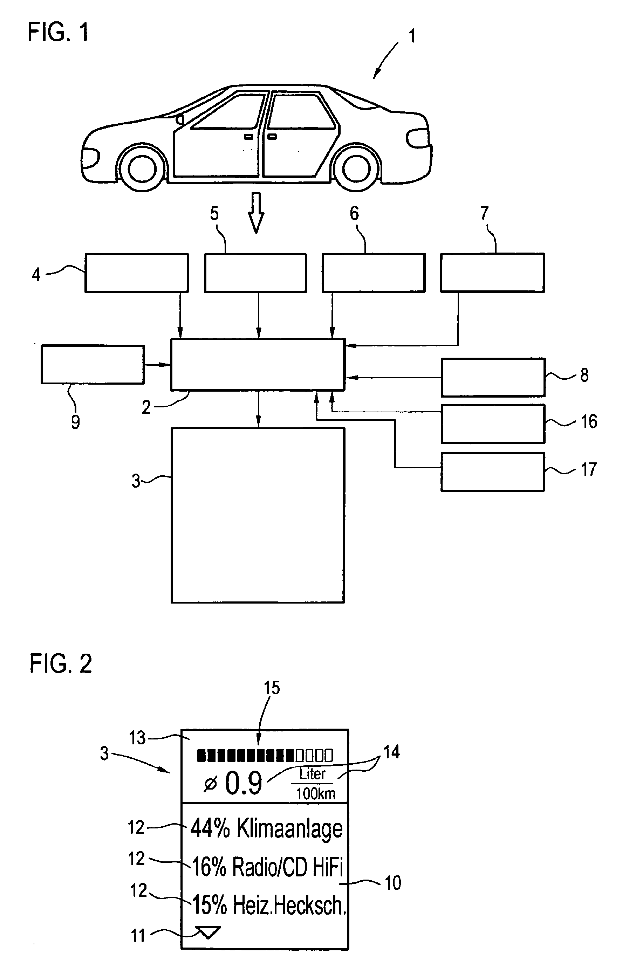

Fig. 1 zeigt ein erfindungsgemäßes Kraftfahrzeug 1, dessen zentrale Systemkomponenten in vergrößerter separater Darstellung gezeigt sind. Vorgesehen ist eine Einrichtung 2, z. B. in Form eines geeigneten Steuergeräts oder dergleichen, die zur Ermittlung des systemspezifischen Verbrauchsanteils verschiedener vom Fahrer wahlweise zu- oder abschaltbarer Betriebssysteme sowie zur Ermittlung und Ausgabe einer Verbrauchsinformation bezogen auf das oder die zugeschalteten Betriebssysteme dient. Die Ausgabe der Verbrauchsinformation erfolgt an einer Anzeigeeinrichtung 3, beispielsweise einem Display im Bereich des Kombiinstruments des Fahrzeugs oder an einem großflächigen Display im Bereich der Armaturenbrettmitte, worüber die meisten modernen Fahrzeuge mittlerweile verfügen.

Zur Ermittlung des systemspezifischen Verbrauchsanteils und der Verbrauchsinformation greift die Einrichtung 2 aktuelle Betriebsparameter der in das System eingebundenen Betriebssysteme ab, wozu die Einrichtung 2 mit einem Fahrzeugbus, üblicherweise dem CAN-Bus, verbunden ist, an den die einzelnen Betriebssysteme ihre Betriebsparameter geben. Exemplarisch sind im gezeigten Beispiel fünf Betriebssysteme dargestellt, von denen die Einrichtung 2 grundsätzlich Betriebsparameter abgreift, wenn sie zugeschaltet sind. Das Betriebssystem 4 ist beispielsweise eine Klimaanlage, das Betriebssystem 5 ist beispielsweise eine Heckscheibenheizung, das Betriebssystem 6 ist zum Beispiel ein Innenraumgebläse, das Betriebssystem 7 eine Radio-/CD- oder Hifi-Einrichtung, während das Betriebssystem 8 beispielsweise eine Sitzheizung ist. All diese Betriebssysteme 4 - 8 können vom Fahrer über geeignete Bedienelemente manuell wahlweise zu- und abgeschaltet werden. Je mehr Betriebssysteme zugeschaltet sind, umso stärker steigt der Kraftstoffverbrauch der Brennkraftmaschine, es kommt also zu einem Mehrverbrauch verglichen mit der Kraftstoffmenge, die zum bloßen Betrieb der Brennkraftmaschine erforderlich ist.

Die Einrichtung 2 ermittelt nun anhand der abgegriffenen Betriebsparameter zum einen, welches der Betriebssysteme 4 - 8 überhaupt zugeschaltet ist, zu welchem also grundsätzlich ein systemspezifischer Verbrauchsanteil und darauf gestützt eine Verbrauchsinformation zu ermitteln ist. Um diese Funktionalität der Einrichtung 2 zuzuschalten, grundsätzlich also diese Erfassung des Verbrauchs der Betriebs- oder Komfortsysteme 4 - 8 zu veranlassen, ist ein geeignetes Bedienelement 9 vorgesehen, das vorzugsweise lenkradseitig angeordnet ist. Hierüber kann beispielsweise über ein an der Anzeigeeinrichtung 3 dargestelltes Menü zur Anwahl verschiedene Menüpunkte, denen entsprechende Funktionen zugeordnet sind, das entsprechende Menü "Verbrauch von Komfortsystemen" angewählt werden. Neben diesem Menüpunkt können selbstverständlich auch andere Menüpunkte wie beispielsweise ein Bordcomputer oder die Einstellung anderer Subsysteme des Fahrzeugs etc. in der Menüleiste angewählt werden. Wird das entsprechende Verbrauchserfassungsmenü angewählt, so wird die Einrichtung 2 grundsätzlich zugeschaltet, sodass die Ermittlung der systemspezifischen Verbrauchsanteile und darauf gestützter Verbrauchsinformation(en) erfolgen kann.

Die Einrichtung 2 nimmt nun zu allen zugeschalteten Betriebssystemen aktuelle Betriebsparameter des jeweiligen Systems auf, anhand welcher die Bestimmung der elektrischen Strom- oder Leistungsaufnahme des jeweiligen Systems ermittelbar ist, wozu gegebenenfalls in der Einrichtung 2 in einem geeigneten Speicher entsprechende systemspezifische Kennfelder oder Kennlinien hinterlegt sind, in denen anhand der aufgenommenen Betriebsparameter die entsprechenden Leistungsaufnahmewerte ermittelt werden können, nachdem üblicherweise die konkret aufgenommene Leistung nicht direkt gemessen wird. Hierbei werden gegebenenfalls noch weitere Betriebsparameter anderer Fahrzeugssysteme berücksichtigt, wie z. B. die Ist-Geschwindigkeit, die Motordrehzahl, die Motorlast oder insbesondere die momentane Generatorleistung, da sich der jeweilige Verbrauchsanteil auch in Abhängigkeit dieser Parameter, insbesondere der Generatorleistung, verändern kann. Exemplarisch sind als weitere Fahrzeugsysteme der Generator 16 und der Motor 17, von denen z. B. die Generatorleistung, die Motordrehzahl und die Motorlast ermittelt werden, gezeigt. Zusätzlich ist es möglich, zu bestimmten Betriebssystemen einen festen, definierten und unveränderlichen (Leistungsaufnahme-)Wert seitens der Einstellung 2 zu hinterlegen, beispielsweise dann, wenn das jeweilige System wie z. B. die Heckscheibenheizung stets dieselbe Leistung aufnimmt. Der entsprechende Leistungsaufnahmewert wird dann aus dem Speicher ausgelesen und der Verbrauchsinformationsermittlung zugrunde gelegt. Im Rahmen dieser Verbrauchsinformationsermittlung erfolgt gegebenenfalls auch eine Glättung der ermittelten und auszugebenden Verbrauchsinformation dahingehend, dass diese sich nicht mit einer noch so geringen Änderung eines der berücksichtigen Betriebsparameter, sei es eines systemeigenen Betriebsparameters oder eines Betriebsparameters eines anderen Fahrzeugssystems (z. B. Generatorleistung, Motordrehzahl etc.) ändert, sondern in einer gewissen Toleranzbreite konstant bleibt. Hierzu können auch retrospektiv Durchschnittswerte der Betriebsparameter genommen werden oder mit entsprechenden Toleranzwerten gearbeitet werden.

In jedem Fall nach Ermittlung entsprechender Verbrauchsinformationen deren Ausgabe an der Anzeigeeinrichtung 3, wobei die Fig. 2 - 4 verschiedene Beispiele hierfür zeigen.

Fig. 2 zeigt ein erstes Beispiel einer solchen Verbrauchsinformationsausgabe an der Anzeigeeinrichtung 3. In einem unteren Anzeigefeld 10 sind zum einen die momentan zugeschalteten Betriebssysteme explizit angeführt, im gezeigten Beispiel die Klimaanlage 4, die Radio-/CD- und Hifi-Einrichtung 7, und die Heckscheibenheizung 5. Wie durch den Pfeil 11 gezeigt, können noch weitere Betriebssysteme zugeschaltet sein, die aufgrund der begrenzten Größe des Anzeigefelds 10 hier nicht gezeigt werden, diese können aber durch Betätigung des Bedienelements 9 beispielsweise in Form eines Scrollrads angewählt werden, das heißt, die Liste setzt sich dann nach unten fort.

Zusätzlich sind zu allen angezeigten Betriebssystemen als Verbrauchsinformationen 12 auch deren prozentuale Verbrauchsanteile am Gesamtverbrauch aller momentan zugeschalteten Betriebssysteme angegeben. Das heißt, die Klimaanlage macht 44 % des gesamten Kraftstoffverbrauchs aller zugeschalteten Betriebssysteme aus, die Radio-/CD- und Hifi-Einrichtung schlägt mit 16 % zu Buche, während die Heckscheibenheizung mit 15 % Anteil angegeben ist, die verbleibenden Prozente verteilen sich auf das eine oder die mehreren weiteren, über den Pfeil 11 anwählbaren Betriebssysteme. Der Fahrer erhält hier also explizit die Nennung der zugeschalteten Betriebssysteme und als Verbrauchsinformationen 12, deren prozentualen Verbrauchsanteile.

Im oberen Anzeigefeld 13 ist eine weitere Verbrauchsinformation 14 in Form des durchschnittlichen, durch den Betrieb sämtlicher zugeschalteten Betriebssysteme verursachten Kraftstoffmehrverbrauchs angegeben. Dieser ist hier zu 0,9 l/100 km angegeben, wobei diese Einheit gewählt wird, wenn das Fahrzeug fährt. Der Fahrer erkennt also unmittelbar, wie viel Kraftstoff er durch den Betrieb der Betriebssysteme mehr verbraucht, verglichen damit, wenn er diese allesamt ausschaltet. Eine beachtliche Reduzierung könnte im beschriebenen Beispielfall bereits dadurch erfolgen, dass er die Klimaanlage ausschaltet, die nahezu die Hälfte der angegebenen 0,9 l/100 km an Mehrverbrauch ausmacht.

Schließlich ist eine weitere Verbrauchsinformation 15 in Form eines Leuchtbalkens gezeigt, beispielsweise realisiert durch eine Reihe einzelner Displayfelder. Diese zeigen an, welchen Anteil der momentane Gesamtverbrauch von 0,9 l/100 km, der aus dem gerade zugeschalteten Betriebssystem resultiert, am maximal möglichen Gesamtverbrauch bei Betrieb aller zuschaltbaren Betriebssysteme ist. Im gezeigten Beispiel beträgt dieser Anteil ca. 70 %.

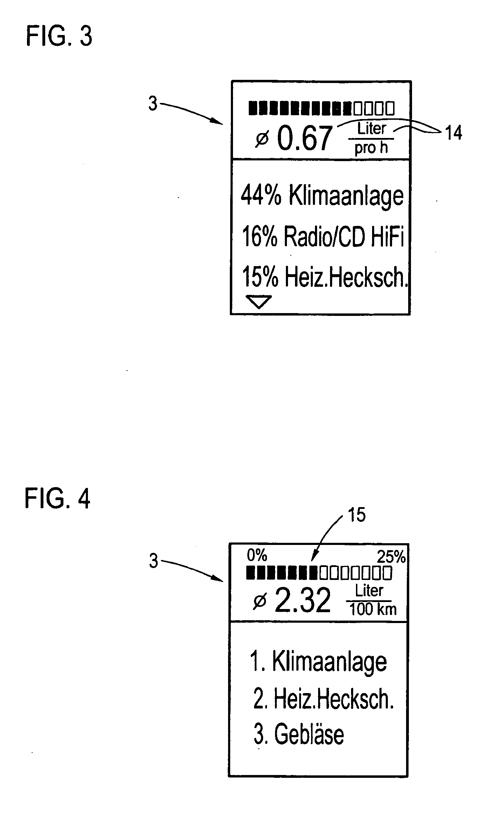

Fig. 3 zeigt eine Anzeige, die der Darstellungsform aus Fig. 2 entspricht, lediglich ändert sich hier die Verbrauchsinformation 14 von einer Angabe in einer Einheit "l/100 km" zu einer Einheit "l/h". Hier ist als Durchschnittsverbrauch 0,67 l/h angegeben. Diese Einheit wird gewählt, wenn das Fahrzeug steht und der Motor läuft. Die Einheit wechselt, wenn sich das Fahrzeug bewegt oder steht.

Fig. 4 zeigt schließlich eine weitere Ausführungsform einer Darstellungsmöglichkeit der Verbrauchsinformationen an der Anzeigeeinrichtung 3. Gezeigt sind auch hier wiederum die zugeschalteten Betriebssysteme, nämlich die Klimaanlage 4, die Heckscheibenheizung 5 und das Innenraumgebläse 6. Diese sind jedoch lediglich der Reihe nach durchnummeriert, ohne dass deren prozentualer Verbrauchsanteil angegeben ist. Auch hier ist exemplarisch der Durchschnittsverbrauch der drei zugeschalteten Betriebssysteme zu 2,32 l/100 km angegeben. Anders ist hier ferner die Darstellung der Verbrauchsinformation 15. Diese ist zwar wiederum als Leuchtbalkenanzeige konzipiert, sie gibt jedoch auf einer Skala von beispielsweise 0 % - 25 % den Anteil des Durchschnittskraftstoffverbrauchs, der auf die zugeschalteten Betriebssysteme zurückzuführen ist, am Gesamtkraftstoffverbrauch des Fahrzeugs, also einschließlich des zum Betrieb der Brennkraftmaschine grundsätzlich benötigten Kraftstoffanteils, an. Im gezeigten Beispiel liegt der betriebssystembezogene Mehrverbrauch bei ca. 12,5 % am Gesamtkraftstoffverbrauch. Eine Begrenzung auf maximal 25 % des Gesamtkraftstoffverbrauchs im Rahmen der Anzeige ist hier ausreichend, nachdem der betriebssystembezogene Gesamtmehrverbrauch in der Regel deutlich kleiner ist als der zum Betrieb der Brennkraftmaschine benötigte Kraftstoffanteil.

Insgesamt erhält der Fahrer mittels der erfindungsgemäß vorgesehenen Einstellung eine Vielzahl von relevanten Verbrauchsinformationen, die ihn zu einer verbrauchsoptimierten weil den Verbrauch senkenden Fahrweise veranlassen können, wobei dies hier sehr einfach bewerkstelligt werden kann, da er lediglich das oder die zugeschalteten, jedoch tatsächlich nicht benötigten Betriebssystem abschalten kann, um den Verbrauch zu reduzieren.

Während im Beispiel nur Betriebssysteme beschrieben sind, ist z.B. auch eine auf eine montierte Dachbox zurückzuführende Verbrauchserhöhung ermittelbar. Die Erkennung einer montierten Dachbox kann z.B. über geeignete Sensoren im Bereich der Boxbefestigung erfolgen. Anhand einer bekannten, aus der Dachbox resultierenden Erhöhung des Fahrzeugluftwiderstands (cw-Wert) kann in Verbindung mit der Fahrgeschwindigkeit der Mehrverbrauch ermittelt werden. Gegebenenfalls kann auch, sofern ermittelbar, das aus der Montage des Anbauteils resultierende Zusatzgewicht ausgegeben werden.

## Patentansprüche

1. Kraftfahrzeug umfassend mehrere vom Fahrer wahlweise zu- und abschaltbare Systeme oder ein oder mehrere bei Bedarf montierbare Anbauelemente, deren Betrieb oder Anbau zu einer Erhöhung des Energieverbrauchs in Form eines Mehrverbrauchs an Kraftstoff, Gas oder Betriebsstrom führt, wobei eine Einrichtung (2) zur Ermittlung des system- oder anbauelementspezifischen Verbrauchsanteils und zur Ausgabe einer Verbrauchsinformation (12, 14, 15) an einer Anzeigeeinrichtung (3) vorgesehen ist,
**dadurch gekennzeichnet,**
**dass** als Verbrauchsinformation (14) der Mehrverbrauch und einzelne systemspezifische Verbrauchsinformationen (12) ausgebbar sind, wobei eine Verbrauchsinformation (12, 14, 15) in Form einer Angabe des durchschnittlichen Verbrauchs pro 100 km und/oder pro Stunde, sowie als prozentualer Anteil am Gesamtverbrauch aller zugeschalteten Betriebssysteme und/oder als prozentualer Anteil am Gesamtenergieverbrauch des Fahrzeugs ausgebbar ist.

2. Kraftfahrzeug nach Anspruch 1,
**dadurch gekennzeichnet,**
**dass** die Einrichtung zur Ermittlung des Verbrauchsanteils anhand von insbesondere die elektrische Leistungsaufnahme eines Systems direkt oder indirekt beschreibenden Informationen ausgebildet ist.

3. Kraftfahrzeug nach Anspruch 2,
**dadurch gekennzeichnet,**
**dass** die Leistungsaufnahme indirekt beschreibende Informationen ein oder mehrere aktuelle Betriebsparameter des Systems (4, 5, 6, 7, 8) sind, anhand welcher die Bestimmung der Leistungsaufnahme anhand eines oder mehrerer systemspezifischer Kennfelder oder Kennlinien erfolgt.

4. Kraftfahrzeug nach einem der vorangehenden Ansprüche,
**dadurch gekennzeichnet,**
**dass** die Einrichtung zur Ermittlung der Verbrauchsinformation (12, 14, 15) ferner in Abhängigkeit eines oder mehrerer Betriebsparameter anderer Fahrzeugsysteme ausgebildet ist.

5. Kraftfahrzeug nach einem der vorangehenden Ansprüche,
**dadurch gekennzeichnet,**
**dass** bei Berücksichtigung der Generatorleistung als Betriebsparameter die Einrichtung zur Glättung der ermittelten und auszugebenden Verbrauchsinformation ausgebildet ist, oder einen festen Generatorleistungswert berücksichtigt.

6. Kraftfahrzeug nach einem der vorangehenden Ansprüche,
**dadurch gekennzeichnet,**
**dass** eine den Anteil des momentanen Gesamtverbrauchs seitens der zugeschalteten Betriebssysteme am maximal möglichen Gesamtverbrauch aller zuschaltbaren Betriebssysteme anzeigende Verbrauchsinformation (15) ausgebbar ist.

7. Kraftfahrzeug nach einem der vorangehenden Ansprüche,
**dadurch gekennzeichnet,**
**dass** die Einrichtung (2) ferner zur Anzeige der zugeschalteten Betriebssysteme (4, 5, 6, 7, 8) ausgebildet ist.

## Claims

1. Motor vehicle comprising a plurality of systems which can be optionally switched on and off by the driver or one or more mounted elements which can be mounted when required and whose operation or mounting leads to an increase in the consumption of energy in the form of additional consumption of fuel, gas or operating current, wherein a device (2) is provided for determining the system-specific or mounted-element-specific proportion of the consumption and for outputting consumption information (12, 14, 15) to a display device (3),
**characterized**
**in that** the additional consumption and individual system-specific consumption information items (12) can be output as consumption information (14), wherein consumption information (12, 14, 15) in the form of an indication of the average consumption per 100 km and/or per hour as well as a percentage of the overall consumption by all the switched-on operating systems and/or as a percentage of the overall energy consumption of the vehicle can be output.

2. Motor vehicle according to Claim 1,
**characterized**
**in that** the device is designed to determine the proportion of the consumption on the basis of information which describes, in particular, the electric power drain of a system directly or indirectly.

3. Motor vehicle according to Claim 2,
**characterized**
**in that** the information which describes the power drain indirectly comprises one or more current operating parameters of the system (4, 5, 6, 7, 8) on the basis of which the power drain is determined on the basis of one or more system-specific characteristic diagrams or characteristic curves.

4. Motor vehicle according to one of the preceding claims,
**characterized**
**in that** the device for determining the consumption information (12, 14, 15) is also designed as a function of one or more operating parameters of other vehicle systems.

5. Motor vehicle according to one of the preceding claims,
**characterized**
**in that** when the generator power is taken into account as an operating parameter, the device is designed for smoothing the determined consumption information which is to be output, or takes into account a fixed generator power value.

6. Motor vehicle according to one of the preceding claims,
**characterized**
**in that** consumption information (15) which displays the proportion of the maximum possible overall consumption of all the operating systems which can be switched on and which is made up by the instantaneous overall consumption by the operating systems which are switched on can be output.

7. Motor vehicle according to one of the preceding claims,
**characterized**
**in that** the device (2) is also designed to display the switched-on operating systems (4, 5, 6, 7, 8).

## Revendications

1. Véhicule automobile comprenant plusieurs systèmes pouvant être connectés et déconnectés de manière sélective par le conducteur, ou un ou plusieurs éléments rapportés pouvant être montés au besoin, dont le fonctionnement ou le montage conduit à une augmentation de la consommation d'énergie sous forme d'une consommation multiple de carburant, de gaz ou d'un fluide de travail, un dispositif (2) étant prévu pour déterminer la proportion de consommation spécifique au système ou aux éléments rapportés et pour fournir une information de consommation (12, 14, 15) à un dispositif d'affichage (3),
**caractérisé en ce que**
les informations de consommation (14) qui peuvent être fournies sont la consommation multiple et des informations de consommation individuelles spécifiques au système (12), une information de consommation (12, 14, 15) pouvant être fournie sous forme d'une indication de la consommation moyenne par 100 km et/ou par heure ainsi que sous forme d'une proportion en pourcentage de la consommation totale de tous les systèmes fonctionnels connectés et/ou sous forme de proportion en pourcentage de la consommation d'énergie totale du véhicule.

2. Véhicule automobile selon la revendication 1,
**caractérisé en ce que**
le dispositif pour déterminer la proportion de consommation est réalisé à l'aide d'informations décrivant directement ou indirectement en particulier la consommation de puissance électrique d'un système.

3. Véhicule automobile selon la revendication 2,
**caractérisé en ce que**
les informations décrivant indirectement la consommation de puissance sont un ou plusieurs paramètres de fonctionnement actuels du système (4, 5, 6, 7, 8) à l'aide desquels on effectue la détermination de la consommation de puissance à l'aide d'un ou de plusieurs champs caractéristiques ou courbes caractéristiques spécifiques au système.

4. Véhicule automobile selon l'une quelconque des revendications précédentes,
**caractérisé en ce que**
le dispositif pour déterminer les informations de consommation (12, 14, 15) est en outre réalisé en fonction d'un ou de plusieurs paramètres de fonctionnement d'autres systèmes du véhicule.

5. Véhicule automobile selon l'une quelconque des revendications précédentes,
**caractérisé en ce que**
si l'on tient compte de la puissance génératrice en tant que paramètre fonctionnel, le dispositif est réalisé pour lisser les informations de consommation déterminées et à fournir, ou tient compte d'une valeur de puissance génératrice fixe.

6. Véhicule automobile selon l'une quelconque des revendications précédentes,
**caractérisé en ce que**
une information de consommation (15) indiquant la proportion de la consommation totale instantanée du côté des systèmes fonctionnels connectés par rapport à la consommation totale possible maximale de tous les systèmes fonctionnels commutables, peut être fournie.

7. Véhicule automobile selon l'une quelconque des revendications précédentes,
**caractérisé en ce que**
le dispositif (2) est en outre réalisé pour afficher les systèmes fonctionnels connectés (4, 5, 6, 7, 8).
